# EUROPEAN PATENT APPLICATION

(11) **EP 2 249 197 A1**
(43) Date of publication of application: **10.11.2010**
(21) Application number: 08872277.2
(22) Date of filing: 12.12.2008
(51) Int. Cl.: G02F 1/13357, F21Y 103/00

(54) **BACKLIGHT UNIT AND LIQUID CRYSTAL DISPLAY DEVICE**

(30) Priority: 15.02.2008 JP 2008035346
(71) Applicant: Sharp Kabushiki Kaisha, Osaka-shi, Osaka 545-8522 (JP)
(72) Inventor: NANGO, Tomoko, Osaka 545-8522 (JP); KURIHARA, Takashi, Osaka 545-8522 (JP); KUME, Yasuhiro, Osaka 545-8522 (JP); HATA, Masayuki, Osaka 545-8522 (JP); OKAMOTO, Takaaki, Osaka 545-8522 (JP); MATSUMOTO, Kazuhiro, Osaka 545-8522 (JP); YABUTA, Koji, Osaka 545-8522 (JP); FUJIMOTO, Hideki, Osaka 545-8522 (JP); HOHSHI, Norikazu, Osaka 545-8522 (JP); WADA, Masakazu, Osaka 545-8522 (JP); MATSUSHITA, Tomohisa, Osaka 545-8522 (JP)
(74) Representative: Müller - Hoffmann & Partner
(86) International application number: PCT/JP2008/072698
(87) International publication number: WO 2009/101746

(57) **Abstract**

A backlight unit (60) includes: a light guiding plate (64); and a diffusing sheet (70), the backlight unit (60) causing light exiting through a light exit plane (80) thereof to backlight a liquid crystal display element (20), the light exiting through the light exit plane (80), having a half width of not more than 44°.

## Description

### Technical Field

The present invention relates to a backlight unit and a liquid crystal display device, particularly to a backlight unit and a liquid crystal display device, which are capable of realizing a high-contrast display.

### Background Art

Liquid crystal display devices have been widely used as display devices. These liquid crystal display devices generally include a liquid crystal display element and a backlight unit, mainly. The liquid crystal display element has such a structure that a liquid crystal layer is sandwiched between transparent substrates, each of which is provided with a polarizer. Further, the backlight unit is configured to backlight a liquid crystal display panel included in the liquid crystal display element, and includes a light source, a light guide, a diffuser, and the like.

Recently, the liquid crystal display devices have been required to have a higher brightness and a higher contrast, etc. In response to these requests, various techniques have been proposed.

### (Patent Literature 1)

To begin with, an art described in Patent Literature 1 is explained below.

A liquid crystal display element (liquid crystal display device) described in Patent Literature 1 includes BEF (product name: abbreviation of Brightness Enhancement Film), which is a reflective polarizer film with a brightness enhancement effect made by Sumitomo 3M Limited. The BEF improves the liquid crystal display element in brightness, etc. Further, a backlight-unit-side polarizing film (polarizer) is provided with light diffusing means.

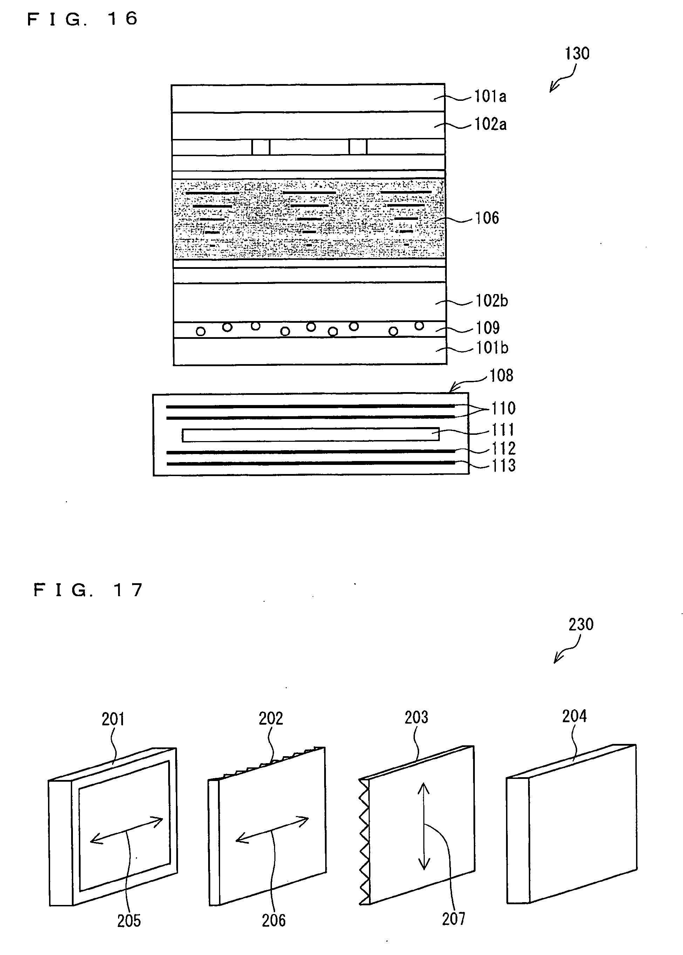

Hereinafter, the liquid crystal display device of Patent Literature 1 is described as to its specific configuration, referring to a cross-sectional view of Fig. 16 illustrating a configuration of a conventional liquid crystal display device. A liquid crystal display device 130 described in Patent Literature 1 is configured such that a TN (Twisted Nematic) mode liquid crystal layer 106 is sandwiched between substrates (transparent substrates) 102a and 102b, and polarizing films 101 a and 101 b are provided. Furthermore, a backlight unit 108 is provided on a back side of the liquid crystal display device 130. The backlight unit 108 is mainly constituted by a reflecting plate 113, a lower diffusing sheet 112, a light guiding plate 111, and a BEF 110.

Furthermore, a scattering-matter-included film 109 is provided between the substrate 102b on backlight unit 108 side and the polarizing film 101b.

### (Patent Literature 2)

Next, an art described in Patent Literature 2 is explained below.

A liquid crystal display device described in Patent Literature 2 is configured such that a liquid crystal display element (liquid crystal display element) in which a Twisted Nematic liquid crystal (liquid crystal layer) is sandwiched has a scattering layer between a polarizing plate and a light guiding plate, so that the scattering layer keeps a polarization state constant substantially.

With this configuration, the liquid crystal display device described in Patent Literature 2 makes it possible to realize bright display.

### (Patent Literature 3)

Next, an art described in Patent Literature 3 is explained, referring to Fig. 17, which is a cross-sectional perspective view illustrating a configuration of a liquid crystal display device described in Patent Literature 3.

As illustrated in Fig. 17, a liquid crystal display device 230 described in Patent Literature 3 includes a liquid crystal display element 201 and a backlight (backlight unit) 204. Between the liquid crystal display element 201 and the backlight 204, two lens films 202 and 203 are provided. The lens films 202 and 203 are laminated so that their prism orientation directions 206 and 207 cross each other at the right angles, and the prism orientation direction 206 of the lens film 202, which is the lens film located closer to the liquid crystal display element 201, is parallel to a transmission axis 205 of a polarizing plate, which is located on an incident light side of the liquid crystal display element 201.

With this configuration, the liquid crystal display device described in Patent Literature 3 makes it possible to realize display with a high brightness.

### (Patent Literature 4)

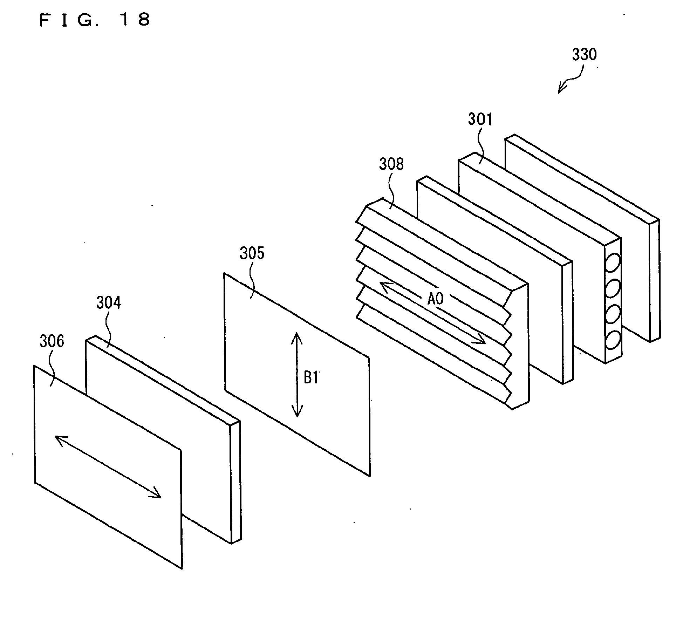

Next, an art described in Patent Literature 4 is explained, referring to Fig. 18, which is a cross-sectional perspective view illustrating a configuration of a liquid crystal display device described in Patent Literature 4.

As illustrated in Fig. 18, a liquid crystal display device 330 described in Patent literature 4 includes a light incidence polarizing plate (polarizer) 305, a light exit polarizing plate (polarizer) 306, a liquid crystal panel 304 between the light incidence polarizing plate 305 and the light exit polarizing plate 306, and a backlight source (light source) 301 provided behind the liquid crystal panel 304. The liquid crystal display device 330 further includes a prism sheet 308 between the light incidence polarizing plate 305 and the backlight source 301.

A ridge-line direction A0 of the prism sheet 308 and a transmission axis direction B0 of the light incidence polarizing plate 305 cross each other at the right angles. With this configuration, the liquid crystal display device described in Patent Literature 4 makes it possible to realize display with a higher brightness.

### (Patent Literature 5)

Next, an art described in the Patent Literature 5 is explained below.

A liquid crystal display device described in Patent Literature 5 is configured such that a polarized light-separating surface or the like is provided to face a light exit plane of a plane light guide (light guiding plate) of a backlight unit, and the polarized light-separating surface or the like can selectively reflect or transmit a polarization component.

With this configuration, the liquid crystal display device described in Patent Literature 5 is improved in brightness in its normal direction of a display surface, especially.
[Patent Literature 1]
   Japanese Patent Application Publication, Tokukai No. 2003-121847 A (Publication Date: April 23, 2003)
[Patent Literature 2]
   Japanese Patent Application Publication, Tokukai No. 2003-15133 A (Publication Date: January 15, 2003)
[Patent Literature 3]
   Japanese Patent Application Publication, Tokukaihei No. 8-22000 A (Publication Date: January 23, 1996)
[Patent Literature 4]
   Japanese Patent Application Publication, Tokukai No. 2000-122046 A (Publication Date: April 28, 2000)
[Patent Literature 5]
   Japanese Patent Application Publication, Tokukai No. 2003-84283 A (Publication Date: March 19, 2003)

### Summary of Invention

However, the conventional liquid crystal display devices have a problem of having an insufficient contrast.

Especially, the problem is that, in a liquid crystal display device in which a liquid crystal display element capable of realizing a high-contrast display (e.g., an MVA mode liquid crystal display element) is used, it is difficult to cause the liquid crystal display element to fully show a high contrast characteristic which the liquid crystal display element is supposed to have. The following description discusses this point.

### (Configuration of Liquid Crystal Display Device)

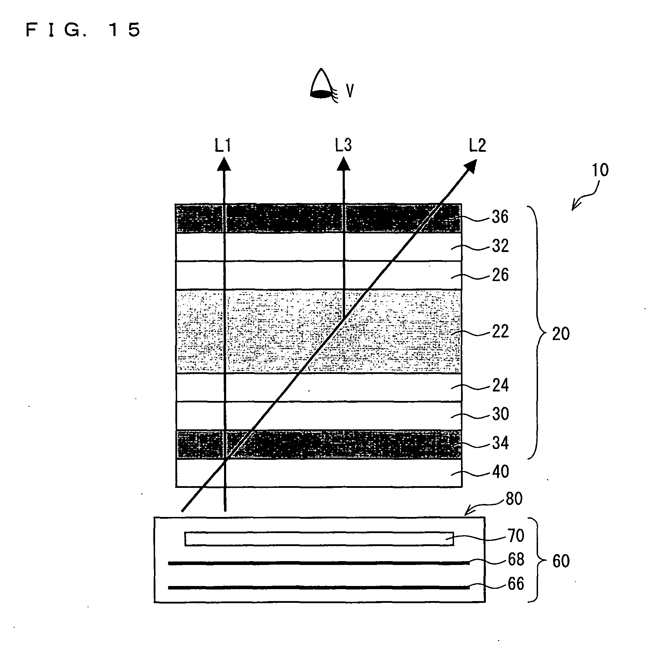

Fig. 15 is a cross-sectional view schematically illustrating an example of a configuration of a liquid crystal display device 10.

As illustrated in Fig. 15, the liquid crystal display device 10 includes a liquid crystal display element 20 and a backlight unit 60 provided behind the liquid crystal display element 20.

The liquid crystal display element 20 is configured such that a liquid crystal layer 22 is sandwiched between a first substrate 24 and a second substrate 26. On the first substrate 24, a first phase plate 30 and a first polarizing plate 34 are provided in this order. Similarly, on the second substrate 26, a second phase plate 32 and a second polarizing plate 36 are provided in this order.

Further, a reflective polarizer film with a brightness enhancement effect 40 is provided between the first polarizing plate 34 and the backlight unit 60.

The backlight unit 60 includes a light source (not illustrated), a light guiding plate (not illustrated), two prism sheets (a first prism sheet 66 and a second prism sheet 68), and an upper diffusing sheet 70.

### (Light Traveling Process)

Next, a process in which light travels through the liquid crystal display device 10 is explained below.

Whether or not light vertically exiting from the backlight unit 60 toward the liquid crystal display element 20 (L1 illustrated in Fig. 15) is emitted to outside the liquid crystal display device 10 depends on whether the liquid crystal layer 22 is in an ON or OFF state. Namely, while the liquid crystal layer 22 is in the ON state, the light L1 is emitted to outside the liquid crystal display device 10 without being blocked by the liquid crystal display element 20.

In contrast, while the liquid crystal layer 22 is in the OFF state, since the light L1 is blocked by the liquid crystal display element 20, the light L1 is not emitted to outside the liquid crystal display device 10.

Note that a ratio of (i) an amount of light emitted while the liquid crystal layer 22 is in the ON state (an ON light amount) to (ii) an amount of light emitted while the liquid crystal layer 22 is in the OFF state (an OFF light amount) is referred to as a contrast (ON light amount/OFF light amount).

Normally, the light L1 which enters into the liquid crystal display element 20 from its normal direction can realize a high ON light amount and a low OFF light amount in accordance with whether the liquid crystal layer 22 is in the ON or OFF state.

Especially, for example, in a case where the liquid crystal display element 20 is an MVA mode liquid crystal display element capable of realizing a high-contrast display, the light L1 incident from the normal direction can realize a contrast of, for example, several thousands.

### (Light from Normal Direction)

Note here that, in order to realize a high contrast, it is particularly important to reduce the OFF light amount while the liquid crystal layer 22 is in the OFF state.

In this regard, the light L1 which enters into the liquid crystal display element 20 from its normal direction is likely to realize a low OFF light amount.

This is because the light L1 which enters into the liquid crystal display element 20 from its normal direction changes and travels as originally designed since the light L1 vertically enters into the polarizing plates (the first polarizing plate 34 and the second polarizing plate 36), the phase plates (the first phase plate 30 and the second phase plate 32), the liquid crystal layer 22, and the like.

### (Inclined light)

In contrast, light (inclined light) L2 which diagonally exits from the backlight unit 60 and then diagonally enters into the liquid crystal display element 20 is different from the light L1 in that the light L2 may cause a reduction in contrast. The following description discusses this point.

While the liquid crystal layer 22 is in the OFF state, the inclined light L2 is normally invisible to a viewer V who views the liquid crystal display device 10 from a normal direction of the liquid crystal display device 10.

Therefore, the inclined light L2 does not cause a reduction in contrast in principle.

### (Light bending)

However, a direction in which the inclined light L2 travels may change. Specifically, a light path may bend toward the viewer V in the liquid crystal display element 20 (see an arrow L3 illustrated in Fig. 15).

Examples of various reasons for such light bending occurring in the liquid crystal display element 20 include scattering in the liquid crystal layer 22, a color filter (not illustrated), and/or a TFT substrate (not illustrated).

Light which diagonally enters into the liquid crystal display element 20 and diagonally travels through the liquid crystal display element 20 may exit from the liquid crystal display element 20 with a certain level of brightness (a certain amount of light) even while the liquid crystal layer 22 is in the OFF state. Such light causes a leakage of light while the liquid crystal layer 22 is in the OFF state.

### (Leakage of Light)

This is because a desired optical change cannot be obtained since (i) the light L1 which enters into the liquid crystal display element 20 from its normal direction and (ii) the inclined light L2 have different optical path lengths when the lights L1 and L2 are transmitted through optical plates (e.g., the phase plate and the polarizing plate), the liquid crystal layer 22, and the like. Namely, the liquid crystal display element 20 depends on an angle in terms of its optical characteristic, and this dependence causes a leakage of light.

Specifically, the phase plates (the first phase plate 30 and the second phase plate 32), the polarizing plates (the first polarizing plate 34 and the second polarizing plate 36), the liquid crystal layer 22, and the like are designed so that the ON light amount and the OFF light amount are optimized, that is, the ON light amount is large and the OFF light amount is small, with respect to light which enters into the liquid crystal display element 20 from its normal direction.

Especially for the OFF light amount, the liquid crystal display element 20 is optically designed so that light which enters into the liquid crystal display element 20 from its normal direction is blocked at the maximum.

Accordingly, the inclined light is insufficiently blocked even while the liquid crystal layer 22 is in the OFF state. As a result, the inclined light exits from inside to outside the liquid crystal display element 20 as a leakage of light.

Such a leakage of light is a particularly serious problem in a liquid crystal display device including a liquid crystal display element capable of realizing a high-contrast display.

The present invention has been made in view of the problems, and an object of the present invention is to provide a backlight unit and a liquid crystal display device, which are capable of realizing a higher-contrast display while constantly functioning as a surface light source.

More specifically, an object of the present invention is to provide a backlight unit and a liquid crystal display device, which are capable of suppressing an intensity of the inclined light which enters into a liquid crystal display element and causes a reduction in contrast.

In order to attain the object, a backlight unit of the present invention includes: a light guiding plate; and a diffusing sheet, the backlight unit causing light exiting through a light exit plane thereof to backlight a liquid crystal display element, the light exiting through the light exit plane, having a half width of not more than 44°.

The backlight unit of the present invention is preferably configured such that the half width is not less than 20° and not more than 40°.

### (Half Width)

To begin with, a half width is explained below. As for a measured sample (e.g., a backlight unit) in which a half width and the like is measured, an inclined angle at which light has an intensity which is half as high as an intensity of light exiting from the measured sample through its light exit plane and in its normal direction is referred to as a half width (degree). This is based on a characteristic that emitted light has a weaker intensity as the emitted light is more inclined from the normal direction.

With this configuration, the backlight unit has a half width of not more than 44°, preferably of not less than 20° and not more than 40°. This can realize a backlight unit which is capable of realizing a higher-contrast display while constantly functioning as a surface light source. The following description discusses this point.

### (Design of Liquid Crystal Display Element)

A liquid crystal display element toward which light is emitted from a backlight unit is generally designed so that light which enters into the liquid crystal display element through its rear surface and from its normal direction and then exits from the liquid crystal display element through its front surface and in its normal direction has a maximum contrast. Specifically, optical characteristics of optical members such as a polarizing plate and a phase plate, and a liquid crystal layer, each of which is included in the liquid crystal display element, are designed so that such light has a high contrast.

### (Backlight Unit as Surface Light Source)

On the other hand, a backlight unit is required to emit light which is uniform in its light exit plane so that a display which has an in-plane uniform brightness is realized by the liquid crystal display element. In other words, the backlight unit is required to have a function as a surface light source.

In order to function as the surface light source, the backlight unit generally includes a diffusing sheet for causing light to be diffused.

Since the backlight unit includes the diffusing sheet, light exiting from the backlight unit through its light exit plane is normally oriented in various directions.

Accordingly, light which exits from the backlight unit and then enters into the liquid crystal display element encompasses not only light which enters into the liquid crystal display element from its normal direction but also light which enters into the liquid crystal display element from a direction which is inclined from the normal direction of the liquid crystal display element.

Note that the diffusing sheet is a generic term for a sheet which has a function of causing a light beam to be diffused.

### (Reduction in Contrast)

As described earlier, a contrast of the liquid crystal display element is designed on the premise of light which enters into the liquid crystal display element from its normal direction. Therefore, for example, in a case where the inclined light bends in the liquid crystal display element and is then emitted from the liquid crystal display element in its normal direction, the emitted light has no desired brightness (white or black). This is likely to cause a reduction in contrast.

In this regard, since the backlight unit having the above configuration is designed such that a half width showing a diffusion (scattering) characteristic of emitted light is set to an appropriate value, the backlight unit secures a scattering characteristic of emitted light sufficient for enabling the backlight unit to serve as a surface light source while the backlight unit suppresses an intensity of inclined light which causes the reduction in contrast.

As described earlier, this configuration brings about an effect of providing a backlight unit which is capable of realizing a higher-contrast display while constantly functioning as a surface light source. More specifically, this configuration brings about an effect of providing a backlight unit which is capable of suppressing an amount of the inclined light.

Since a diffusion characteristic of emitted light is appropriately set in the backlight unit having this configuration, it is possible to prevent a moiré produced mainly due to an interaction between the backlight unit and a pixel of the liquid crystal display element.

The backlight unit of the present invention is preferably configured such that the diffusing sheet has a haze value of not more than 80%.

With this configuration, since the diffusing sheet has a haze value of not less than 50% and not more than 80%, it is easily possible to form a backlight unit in which light exiting from the backlight unit through its light exit plane has a half width of not less than 28° and not more than 44°.

The backlight unit of the present invention is preferably configured such that the diffusing sheet has a haze value of not less than 30% and not more than 76%.

With this configuration, since the diffusing sheet has a haze value of not more than 80%, it is easily possible to form a backlight unit in which light exiting through its light exit plane has a half width of not less than 20° and not more than 40°.

The backlight unit of the present invention is preferably configured to further include a prism sheet provided between the light guiding plate and the diffusing sheet.

With this configuration, since the backlight unit includes the prism sheet, it is possible to realize emission of light with a higher brightness, for example in a normal direction of the backlight unit.

Note here that the prism sheet refers to an optical sheet on a surface of which grooves are provided in a given direction so that a direction in which light having been transmitted through the prism sheet travels is controlled.

A liquid crystal display device of the present invention is preferably configured to include: a liquid crystal display element; and a backlight unit as mentioned above, the backlight unit being provided on a back side of the liquid crystal display element.

With this configuration, since the liquid crystal display device includes the backlight unit in which a half width is appropriately set, it is possible to realize a high-contrast display.

The liquid crystal display device of the present invention is preferably configured to further include a reflective polarizer film with a brightness enhancement effect provided between the liquid crystal display element and the backlight unit.

With this configuration, in spite of the bright enhancement film which may reduce a contrast, the appropriately set half width of a backlight unit allows realizing a high-contrast display.

Note that the reflective polarizer film with a brightness enhancement effect refers to a film which, for example, in a case where polarized light which reaches the reflective polarizer film with a brightness enhancement effect includes a p-wave and an s-wave, causes an increase in incident light toward, for example, a polarizing plate adjacent to the reflective polarizer film with a brightness enhancement effect by causing one of the polarized waves such as the p-wave to be transmitted through the film and causing the remaining s-wave to be reflected on the film.

The liquid crystal display device of the present invention is preferably configured such that: the liquid crystal display element is a vertical alignment mode liquid crystal display element; and a liquid crystal layer included in the liquid crystal display element is divided into a plurality of different alignment regions in plan view.

With this configuration, the liquid crystal display element is configured to be a so-called MVA mode liquid crystal display element. Note here that the MVA mode liquid crystal display element is generally capable of realizing a high-contrast display.

Accordingly, a combination of the liquid crystal display element and a backlight unit in which a half width is appropriately set makes it possible to realize a display in which a high contrast characteristic which the liquid crystal display element is supposed to have is not so impaired.

The liquid crystal display device of the present invention is configured such that: the liquid crystal display element is a vertical alignment mode liquid crystal display element; liquid crystal molecules are omnidirectionally aligned in plan view in a liquid crystal layer included in the liquid crystal display element; and circularly polarizing plates are provided on both sides of the liquid crystal layer.

The liquid crystal display device of the present invention may be configured such that the liquid crystal display element is a twisted nematic liquid crystal display element.

With these configurations, the liquid crystal display element is configured to be (i) a circular polarization type liquid crystal display element of a vertical alignment mode or (ii) a so-called TN mode liquid crystal display element.

Note here that, in each of (i) the circular polarization type liquid crystal display element of the vertical alignment mode and (ii) the TN mode liquid crystal display element, the inclined light which enters into the liquid crystal display element is emitted in its normal direction, thereby causing a reduction in contrast.

In this regard, with these configurations, a combination of the liquid crystal display element and a backlight unit in which a half width is appropriately set makes it possible to prevent a reduction in contrast of the liquid crystal display element.

As described earlier, the backlight unit of the present invention is configured such that light exiting through its light exit plane has a half width of not more than 44°.

Therefore, the present invention brings about an effect of providing a backlight unit which is capable of realizing a higher-contrast display while constantly functioning as a surface light source. More specifically, the present invention brings about an effect of providing a backlight unit and a liquid crystal display device, which are capable of suppressing an intensity of the inclined light which enters into a liquid crystal display element so as to cause a reduction in contrast.

### Brief Description of Drawings

Fig. 1

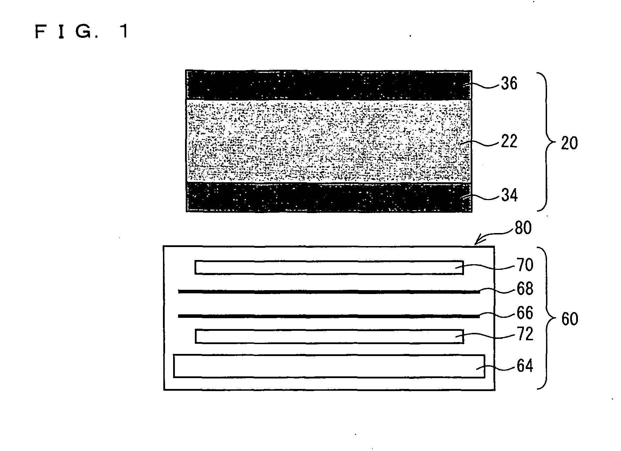

   Fig. 1 is a cross-sectional view illustrating a liquid crystal display device of an embodiment of the present invention.
Fig. 2

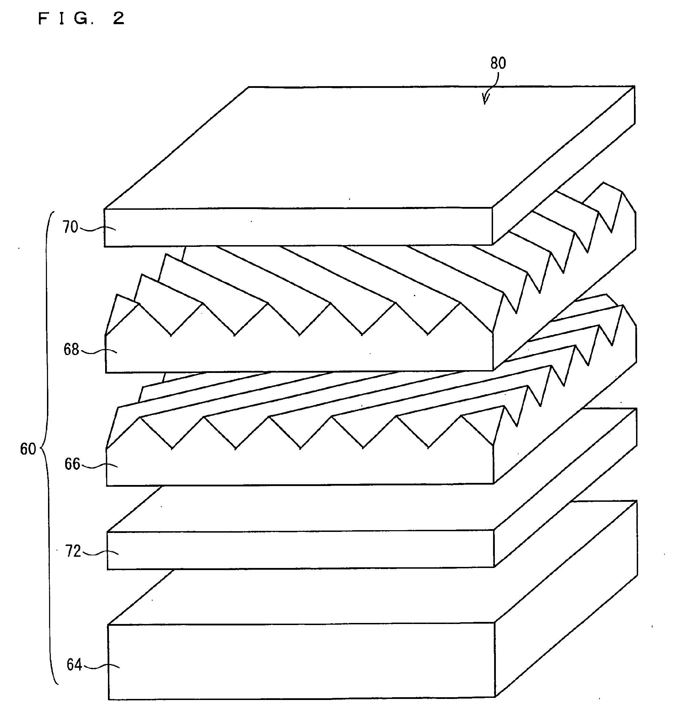

   Fig. 2 is a perspective view illustrating a cross-section of a backlight unit of the embodiment of the present invention.
Fig. 3

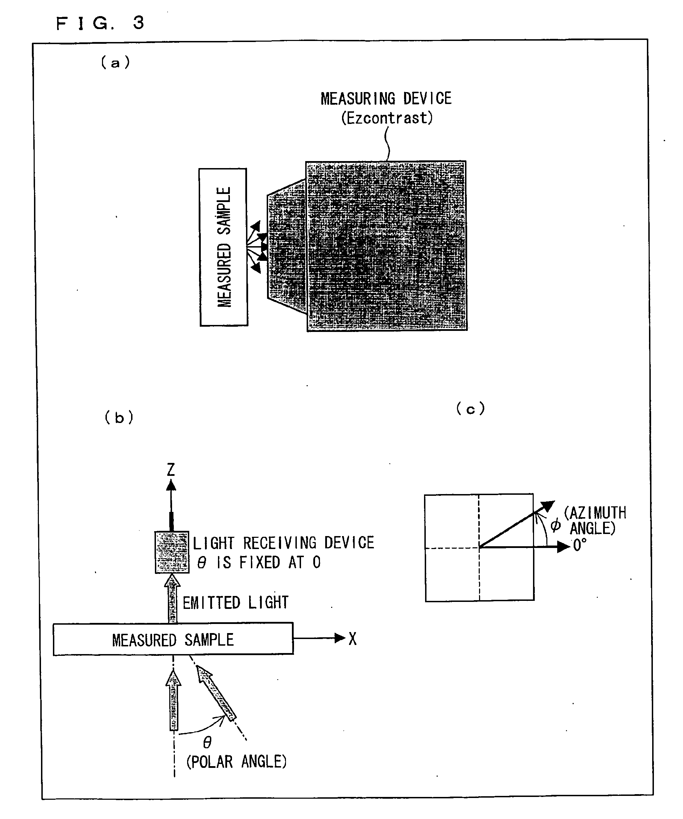

   Fig. 3 is a drawing illustrating a measuring system for an optical characteristic.
Fig. 4

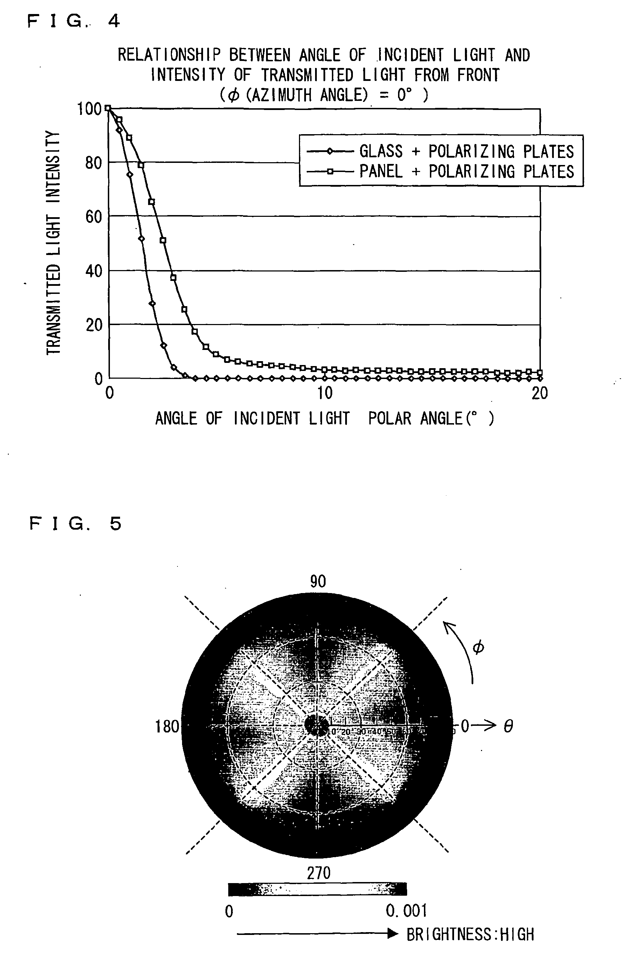

   Fig. 4 is a graph illustrating a relationship between a polar angle and an transmitted light intensity.
Fig. 5
   Fig. 5 is a graph illustrating a relationship between an angle of incidence and an transmitted light intensity.
Fig. 6

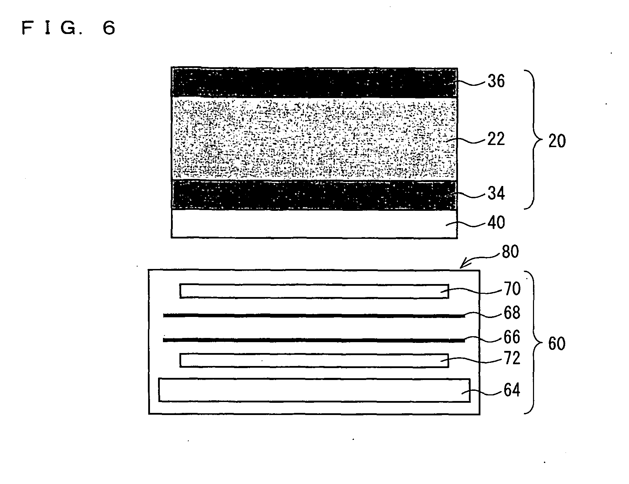

   Fig. 6 is a cross-sectional view illustrating a liquid crystal display device of another embodiment of the present invention.
Fig. 7

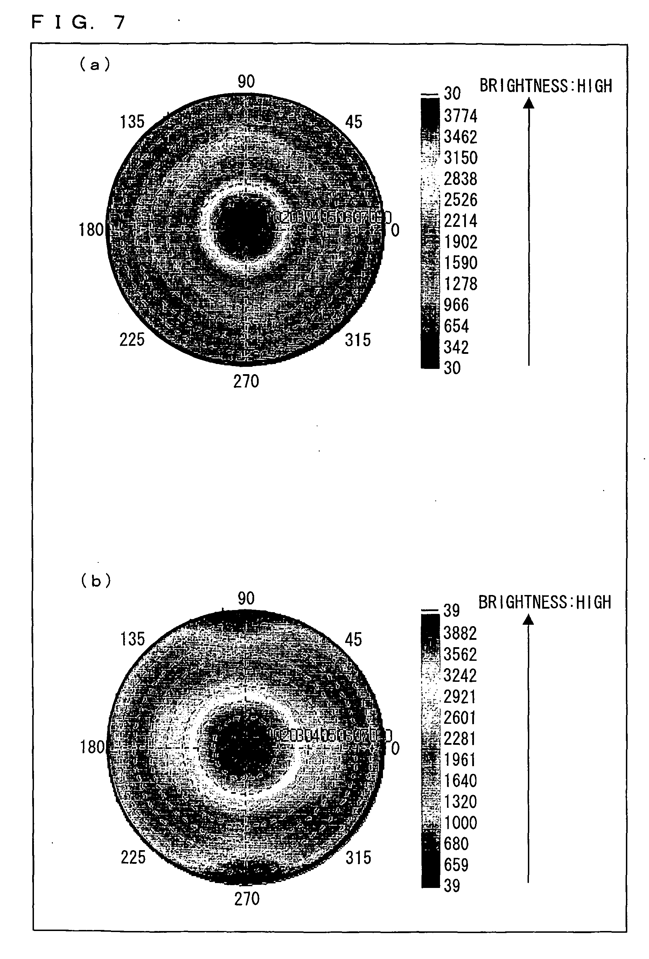

   Fig. 7 has graphs illustrating brightness distributions of light exiting from a backlight unit.
Fig. 8

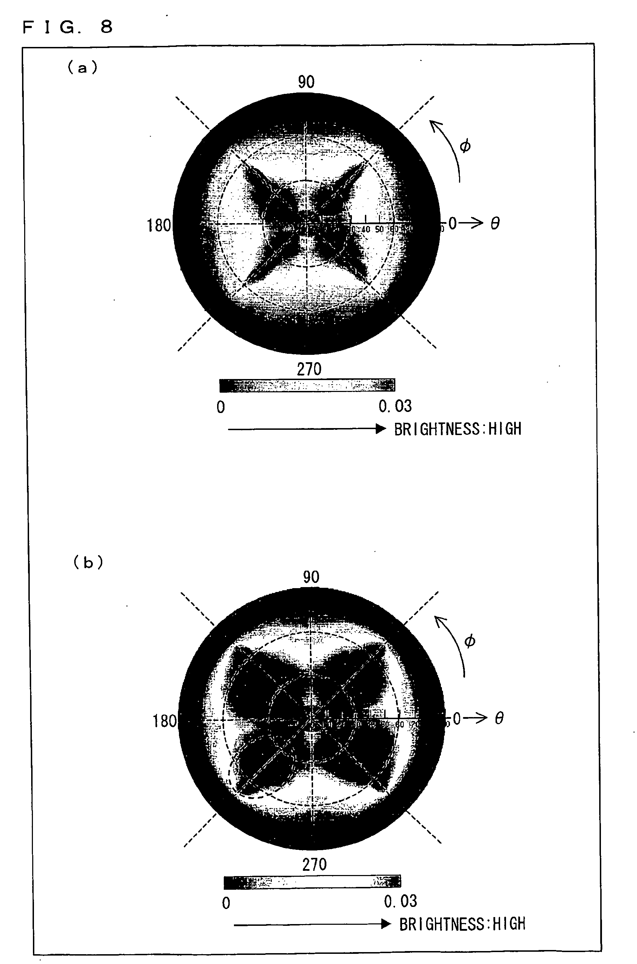

   Fig. 8 has graphs illustrating brightness distributions of light exiting from the backlight unit.
Fig. 9

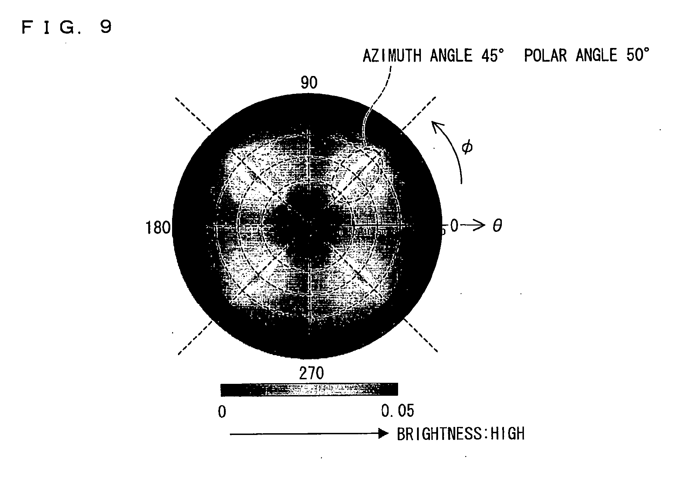

   Fig. 9 is a graph illustrating a difference in light exiting from the liquid crystal display device between (i) the liquid crystal display device including a reflective polarizer film with a brightness enhancement effect and (ii) the liquid crystal display device including no reflective polarizer film with a brightness enhancement effect.
Fig. 10

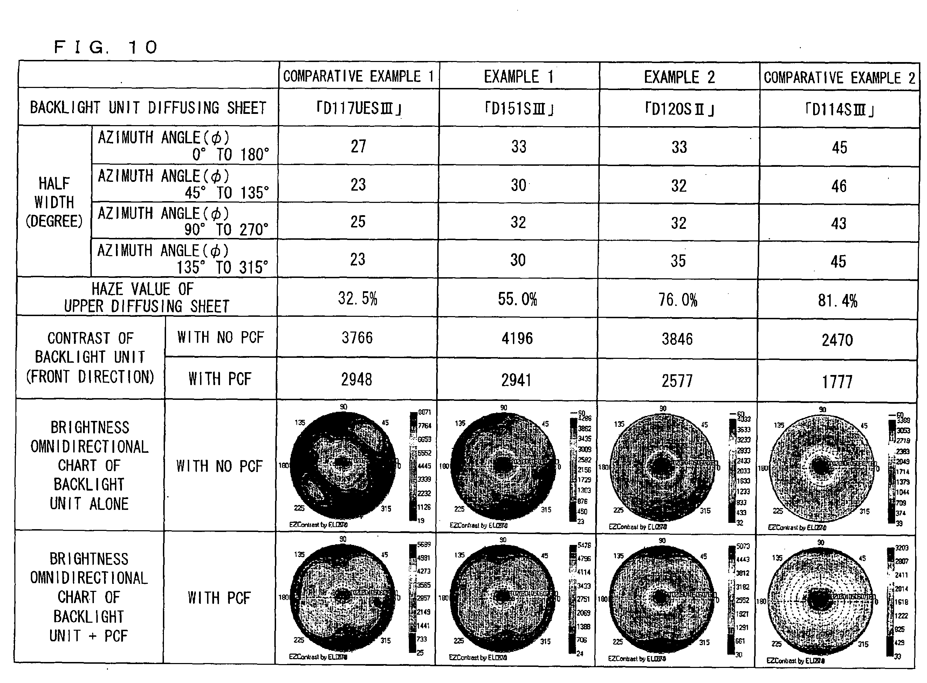

   Fig. 10 is a chart illustrating characteristics of light exiting from the backlight unit for Examples and Comparative Examples.
Fig. 11

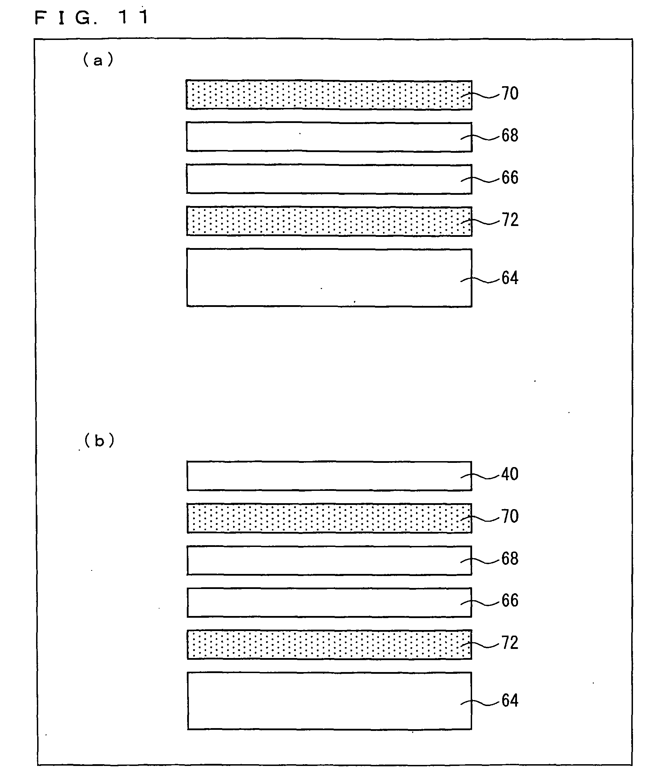

   Fig. 11 has cross-sectional views schematically illustrating configurations of measured samples in each of which a half width and the like is measured.
Fig. 12

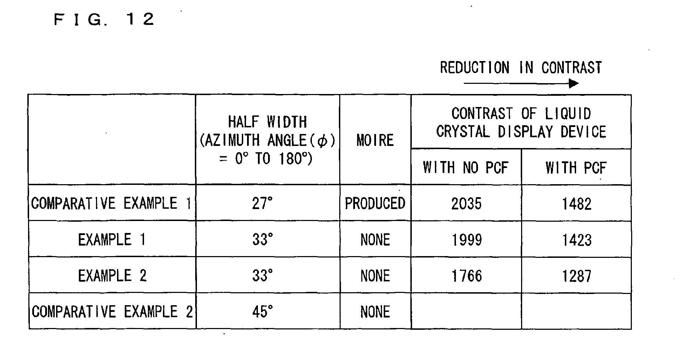

   Fig. 12 is a chart illustrating contrasts for the Examples and the Comparative Examples.
Fig. 13

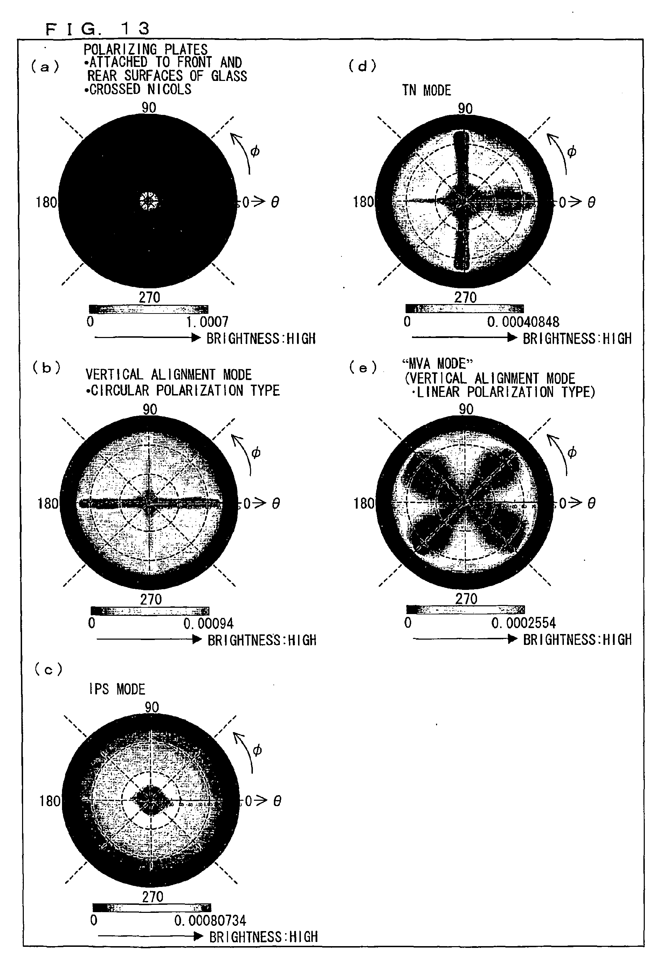

   Fig. 13 has graphs illustrating light scattering characteristics of respective liquid crystal display modes.
Fig. 14

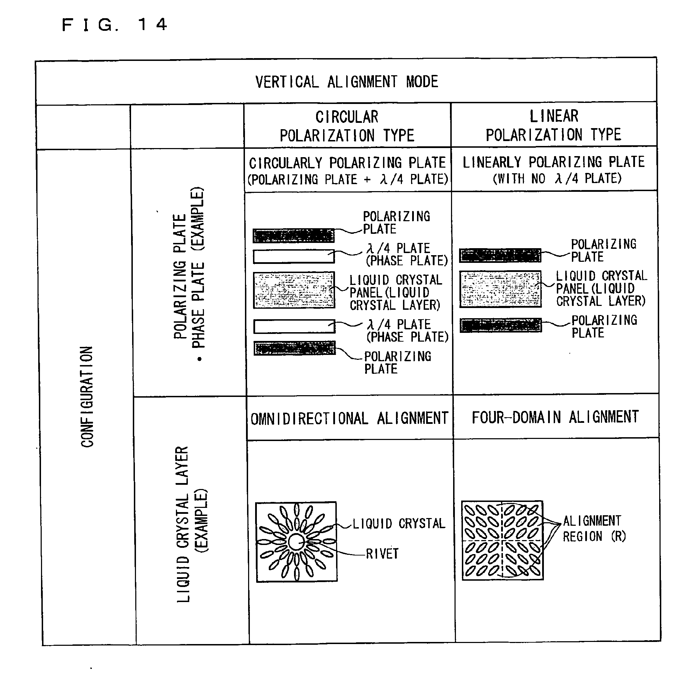

   Fig. 14 is a chart illustrating differences between a circular polarization type liquid crystal display device and a linear polarization type liquid crystal display device each employing a vertical alignment mode.
Fig. 15
   Fig. 15 is a cross-sectional view schematically illustrating a configuration of the liquid crystal display device.
Fig. 16
   Fig. 16 is a cross-sectional view schematically illustrating a configuration of a conventional liquid crystal display device.
Fig. 17
   Fig. 17 is a cross-sectional perspective view illustrating a configuration of another conventional liquid crystal display device.
Fig. 18
   Fig. 18 is a cross-sectional perspective view illustrating a configuration of still another conventional liquid crystal display device.

### Reference Signs List

- 10: Liquid crystal display device
- 20: Liquid crystal display element
- 22: Liquid crystal layer
- 40: Reflective polarizer film with a brightness enhancement effect
- 60: Backlight unit
- 64: Light guiding plate
- 66: First prism sheet (Prism sheet)
- 68: Second prism sheet (Prism sheet)
- 70: Upper diffusing sheet (Diffusing sheet)
- 72: Lower diffusing sheet
- 80: Light exit plane
- R: Orientation region

### Description of Embodiments

### [First Embodiment]

An embodiment of the present invention is described below, referring to the drawings.

### (Liquid crystal display device)

A liquid crystal display device of the present invention has a configuration substantially similar to the configuration of the liquid crystal display device 10 already described, referring to Fig. 15. The liquid crystal display device of the present invention is explained below, referring to Fig. 1, which is a cross-sectional view schematically illustrating a liquid crystal display device of the present embodiment.

Namely, a liquid crystal display device 10 mainly includes a liquid crystal display element 20 and a backlight unit 60. Light exiting from the backlight unit 60 through its light exit plane 80 enters into the liquid crystal display element 20, whereby a display is carried out.

### (Liquid Crystal Display Element)

To begin with, the liquid crystal display element 20 is explained below. The liquid crystal display element 20 of the present embodiment is configured to be a so-called MVA mode liquid crystal display element.

Namely, a liquid crystal layer 22 sandwiched between two substrates (not illustrated) which face each other is sandwiched between a first polarizing plate 34 and a second polarizing plate 36. Liquid crystal molecules included in the liquid crystal layer 22 have a multi-domain alignment (e.g., a four-domain alignment) in plan view.

### (Backlight Unit)

Next, the backlight 60 of the present embodiment is explained below. The backlight unit 60 includes a light source (not illustrated), a light guiding plate 64, two diffusing sheets (an upper diffusing sheet 70 and a lower diffusing sheet 72), and two prism sheets (a first prism sheet 66 and a second prism sheet 68) (see Fig. 1). These members are laminated in the order of: the light guiding plate 64, the lower diffusing sheet 72, the first prism sheet 66, the second prism sheet 68, and the upper diffusing sheet 70.

Specifically, in the backlight unit 60, the first and second prism sheets 66 and 68 have, on their respective top surfaces, linear grooves constituted by triangular peaks and valleys (see Fig. 2).

The grooves of the first and second prism sheets 66 and 68, respectively, are provided so as to cross each other at right angles.

Note that Fig. 2 is a perspective cross-sectional view illustrating a configuration of the backlight unit 60 of the present embodiment.

### (Diffusing Sheet)

Next, the diffusing sheets of the present embodiment are explained below.

The upper diffusing sheet 70 of the present embodiment has a feature that light exiting from the backlight unit 60 in which the upper diffusing sheet 70 is used has a half width of 31°.

### (Half Width)

To begin with, (a) of Fig. 3 schematically illustrates a measuring system for measuring the half width. (a) of Fig. 3 illustrates a measuring system for measuring an intensity etc. of light exiting from a measured sample (e.g., the backlight unit 60).

As illustrated in (a) of Fig. 3, in the measuring system used for measuring the half width, it is possible to simultaneously measure omnidirectional intensities of light exiting from the measured sample by separating the light in increments of 1° for each of an azimuth angle and a polar angle. Numerical data for given azimuth directions are extracted from this measured result, so as to create a two-dimensional graph of "polar angle" to "brightness or contrast". Then, based on the two-dimensional graph, there is found a half width, which is an inclined angle at which emitted light has an intensity which is half as high as an intensity of light emitted in a normal direction of the measured sample. Namely, there is found an angle at which light emitted in an inclined direction has an intensity which is half as high as an intensity of light emitted in the normal direction.

Note that a measuring device for carrying out measurement as mentioned above is not particularly limited. For example, EZcontrast 88 (product name, made by ELDIM) is usable for such measurement.

The backlight unit 60 serves as the measured sample, thereby measuring the half width in the backlight unit 60.

### (Upper Diffusing Sheet)

Note here that, in the present embodiment, a diffusing sheet in which light exiting from the backlight unit 60 has a half width of 31° is used for the upper diffusing sheet 70. The following description discusses this point.

The half width was measured for the backlight unit 60 which is schematically illustrated in Fig. 2 and serves as the measured sample.

Namely, the intensity of received light was measured in a state in which the light guiding plate 64, the lower diffusing sheet 72, the first prism sheet 66, the second prism sheet 68, and the upper diffusing sheet 70 were laminated in this order.

Note here that an azimuth angle (Φ) of 0° is defined as illustrated in (c) of Fig. 3. In this case, the grooves of the first and second prism sheets 66 and 68 are provided at an angle of 45° and 135°, respectively.

The light exiting from the backlight unit 60 was measured under the foregoing conditions and found to have a half width (0° to 360°) of 31°.

Note that, in the present embodiment, a diffusing sheet which has a haze value of 55.0% was used for the upper diffusing sheet 70 and a diffusing sheet which has a haze value of 74.5% was used for the lower diffusing sheet 72.

### (Display Characteristic)

With this configuration, the liquid crystal display device 10 of the present embodiment allows a high-definition and high-contrast display. The following description discusses this point.

### (In-plane Uniformity)

First of all, the liquid crystal display device 10 is preferably configured such that light which is uniformly bright in a plane of the backlight unit 60 exits from the backlight unit 60 so that a display which is uniformly bright in a plane of the liquid crystal display device 10 is realized. Namely, the backlight unit 60 is preferably a uniform surface light source.

In order to realize such an emission characteristic, light exiting from the backlight unit 60 is required to have a high diffusibility. In order to realize such a diffusion characteristic, one possible option is to cause a diffusing sheet included in the backlight unit 60 to have a high diffusibility.

### (Contrast)

Next, a contrast of the liquid crystal display device 10 is explained below.

As described earlier, the liquid crystal display device 10 is required to carry out not only (i) a display which is uniformly bright in its plane (already described) but also (ii) a high-contrast display.

Since the liquid crystal display element 20 is designed so that a high-contrast display can be realized, the inclined light is likely to cause a reduction in contrast.

Such a reduction in contrast due to inclined light is more noticeable mainly in the liquid crystal display device 10 which is capable of realizing a high-contrast display and includes an MVA mode liquid crystal display element such as the liquid crystal display element 20.

### (Reduction in Contrast, Influence on Panel)

Next, a reduction in contrast due to inclined light is more specifically explained below.

As described earlier, light exiting from the backlight unit 60 travels to the viewer V through the two polarizing plates and the liquid crystal layer.

Then, an influence of a liquid crystal display panel on a leakage of light due to the inclined light is explained below. Note here that the liquid crystal display panel is obtained by removing the two polarizing plates (the first and second polarizing plates) from the liquid crystal display element 20. Specifically, the liquid crystal display panel refers to a liquid crystal panel including the liquid crystal layer 22 which is sandwiched between two substrates on which a color filter, a switching element, and the like are provided.

Fig. 4 is a graph illustrating, for two kinds of (first and second) measured samples, intensities of light transmitted in a normal direction to a display surface of each of the measured samples, with respect to the inclined light.

Specifically, the first measured sample is obtained by attaching polarizing plates to both sides of a glass substrate, respectively, so that absorption axes of the respective polarizing plates cross each other at right angles (see "glass + polarizing plates" of Fig. 4). The second measured sample is a liquid crystal display element obtained by attaching polarizing plates to the liquid crystal display panel (see "panel + polarizing plates" of Fig. 4 in which the liquid crystal display panel carries out a black display).

Fig. 4 illustrates a relationship between an angle (a polar angle (θ)) of incident light and a transmitted light intensity for the two measured samples.

Note that, in each of the "glass + polarizing plates" and "panel + polarizing plates", the two polarizing plates are provided in a crossed Nicols relationship in which absorption axes of the respective two polarizing plates cross each other at right angles. Note also that the absorption axis of the back side polarizing plate (the polarizing plate located on a side on which light is incident during measurement) is oriented in a direction of the azimuth angle (Φ) of 0°.

On an outer side of the back side polarizing plate, A-PCF (Polarization Conversion Film) (product name, made by NITTO DENKO CORPORATION) is further provided as a brightness enhancing film.

### (Measuring System (Measurement of Scattering and Light Bending))

Here, an explanation is made as to a measuring system for measuring a light bending characteristic which result is shown in Fig. 4 and other drawings.
(b) of Fig. 3 illustrates a measuring system for measuring an optical characteristic with respect to transmitted light.

In the measuring system illustrated in (b) of Fig. 3, light is emitted into a measured sample through a rear surface of the measured sample, and the light transmitted through the measured sample is received by a light receiving device provided on a front surface of the measured sample, thereby measuring an intensity of the received light.

Note here that an inclined angle from a normal direction of a plane of the measured sample is referred to as a polar angle (θ) (see (b) of Fig. 3) and an angle of a left-handed rotation from a horizontal direction on the plane is referred to as an azimuth angle (Φ) (see (c) of Fig. 3).

Note that the measuring system allows (i) an incidence direction of incident light to be inclined in a direction of the polar angle (θ) and (ii) the inclined incident light to rotate in a direction of the azimuth angle (Φ).

On the other hand, the light receiving device is fixed at the polar angle (θ) of 0° (azimuth angle (Φ) of 0°), i.e., in the normal direction of the plane of the measured sample.

Note that a measuring device for carrying out measurement as mentioned above is not particularly limited. For example, LCD5200 (product name, made by OTSUKA ELECTRONICS CO., LTD.) is usable for such measurement.

### (Measurement Result)

As illustrated in Fig. 4, both of the two measured samples ("glass + polarizing plates" and "panel + polarizing plates") have their respective lower transmitted light intensities as incident light is inclined from the normal direction of the respective measured samples.

Note, however, that the transmitted light intensity decreases more sharply in "glass + polarizing plates". In other words, the inclined light is more likely to be emitted in the normal direction (a direction of the polar angle (θ) of 0°) in "panel + polarizing plates" in which the liquid crystal display panel is added to "glass + polarizing plates".

This is because light which enters into the measured sample tends to change its traveling direction (be scattered) in the liquid crystal display panel.

Then, the inclined light changes its traveling direction in the liquid crystal display panel and then exits in the normal direction, thereby causing a reduction in contrast.

Note that a measurement result illustrated in Fig. 4 is obtained by causing the incident light to be inclined in the direction of the azimuth angle (Φ) of 0°, i.e., in a direction parallel to the absorption axis of the back side polarizing plate.

### (θ and Φ Dependencies of Incident Light)

Tendency of inclined light to be transmitted in a normal direction depends on an azimuth angle Φ of the inclined light. This tendency is explained below, referring to Fig. 5. Fig. 5 is a graph in polar coordinates, showing the result of measuring incident light while changing an azimuth direction of the incident light from 0° to 360° in increments of 5° by use of the measuring system illustrated in (b) of Fig. 3. Fig. 5 is a graph illustrating the transmitted light intensities for a measured sample similar to the "panel + polarizing plates" in a case where the polar angle (θ) and the azimuth angle (Φ) of incident light are changed.

Namely, the measured sample used for the measurement illustrated in Fig. 5 is obtained by attaching polarizing plates to both sides (front and rear surfaces) of a liquid crystal display panel, respectively, in a crossed Nicols relationship. Note that the absorption axis of the back side polarizing plate (the polarizing plate located on a side on which light is incident during measurement) is oriented in a direction of the azimuth angle (Φ) of 90°.

Fig. 5 shows that, in a range of the polar angle (θ) of 0° to 70°, the inclined light is emitted in the normal direction at substantially all the azimuth angles (Φ).

Fig. 5 also shows that the inclined light is likely to be emitted in the normal direction particularly at the azimuth angles (Φ) of 45°, 135°, 225°, and 315°.

### (Behavior of Inclined Light)

As described earlier, in the liquid crystal display element 20, inclined light may change its traveling direction and be emitted in a normal direction, i.e., in a direction of the viewer V of the liquid crystal display device 10. In addition, the inclined light is likely to behave differently from light incident from the normal direction due to a difference in optical path length etc. during transmission through the liquid crystal display element 20. Specifically, light may not be sufficiently blocked even, for example, even in a case where the liquid crystal layer 22 is in an OFF state (the OFF state of the liquid crystal layer 22 refers to a state in which a black display is carried out by a liquid crystal display element, i.e., a state in which the crystal display element has the lowest transmittance).

As a result, during the black display carried out by the liquid crystal display element, the inclined light is emitted as a leakage of light in the normal direction, reaching the viewer V's eyes.

Accordingly, in order to realize a high contrast, it is required that the inclined light be less likely to be emitted in the normal direction.

In this regard, in the liquid crystal display device 10 of the present embodiment, the half width is 31°. Namely, a degree of scattering of light exiting from the backlight unit 60 is appropriately controlled.

This makes it possible to appropriately suppress an intensity of the inclined light.

Further, in the liquid crystal display device 10, light scatters so sufficiently as to realize a uniform brightness in a plane of the liquid crystal display element 20 (already described).

Accordingly, the liquid crystal display device 10 can realize (i) a display which is uniformly bright in the plane of the liquid crystal display element 20 (already described) and (ii) a high-contrast display.

Note that it was also possible to prevent a "moire" produced due to an interaction between (i) a pitch between pixels, more specifically a black matrix defining pixels of the liquid crystal display element 20 and (ii) at least a diffusing sheet and a prism sheet of the backlight unit.

### [Second Embodiment]

Another embodiment of the present invention is explained below, referring to the drawings. Note that a configuration which is not described in the present embodiment is identical to the configuration described in the First Embodiment.

Note also that, for convenience, members having functions identical to those of the respective members illustrated in the drawings of the First Embodiment are given respective identical reference numerals, and a description of those members is omitted here.

A liquid crystal display device 10 of the present embodiment is configured to further include a reflective polarizer film with a brightness enhancement effect 40, as compared to the configuration of the liquid crystal display device 10 of the First Embodiment.

Namely, as illustrated in Fig. 6, which is a cross-sectional view schematically illustrating the liquid crystal display device 10 of the present embodiment, the liquid crystal display device 10 of the present embodiment further includes A-PCF (Polarization Conversion Film) (product name, made by NITTO DENKO CORPORATION) as a reflective polarizer film with a brightness enhancement effect 40 between (i) a first polarizing plate 34 of two polarizing plates (the first polarizing plate 34 and a second polarizing plate 36) which is closer to a backlight unit 60 and (ii) the backlight unit 60.

### (Reflective Polarizer Film with a Brightness Enhancement Effect)

Note here that the reflective polarizer film with a brightness enhancement effect 40 refers to a film in which, for example, a mechanism as described below causes an increase in light which enters into a polarizing plate adjacent to the film.

The mechanism is as follows. For example, in a case where polarized light which reaches the reflective polarizer film with a brightness enhancement effect 40 includes a p-wave and an s-wave, the reflective polarizer film with a brightness enhancement effect 40 causes (i) only one of the polarized waves such as the p-wave to be transmitted therethrough and (ii) the remaining s-wave to be reflected thereon. When reaching the reflective polarizer film with a brightness enhancement effect 40 again, the s-wave thus reflected is partially changed into the p-wave. Then, the reflective polarizer film with a brightness enhancement effect 40 causes the p-wave thus changed to be transmitted therethrough. Such operation is repeatedly carried out, so that only the p-wave, for example is selectively transmitted through the reflective polarizer film with a brightness enhancement effect 40.

Note that the reflective polarizer film with a brightness enhancement effect 40 is not limited to the A-PCF (product name). For example, D-BEF (product name: abbreviation of Brightness Enhancement Film), made by Sumitomo 3M Limited) is also usable. Note also that this reflective polarizer film with a brightness enhancement effect may be referred to as a polarized light reflecting film or a polarized light mirror film.

### (Reflective Polarizer Film with a Brightness Enhancement Effect and Emitted Light)

To begin with, the following description discusses, with reference to (a) and (b) of Fig. 7, a difference in brightness characteristics of light exiting from the backlight unit 60 between (i) a case where the reflective polarizer film with a brightness enhancement effect 40 is provided and (ii) a case where no reflective polarizer film with a brightness enhancement effect 40 is provided.
(a) and (b) of Fig. 7 are graphs illustrating brightness distributions of light exiting from the backlight unit 60.

Specifically, in (a) of Fig. 7, the backlight unit 60 (see Fig. 1), i.e., a laminate of the light guiding plate 64, the lower diffusing sheet 72, the first prism sheet 66, the second prism sheet 68, and the upper diffusing sheet 70 serves as a measured sample. (a) of Fig. 7 illustrates azimuth angle (Φ) and polar angle (θ) dependencies of light exiting from the measured sample.

In contrast, in (b) of Fig. 7, a measured sample is obtained by causing the A-PCF serving as the reflective polarizer film with a brightness enhancement effect 40 to be laminated on the measured sample of (a) of Fig. 7. (b) of Fig. 7 illustrates angle distributions, i.e., azimuth angle (Φ) and polar angle (θ) dependencies (similarly to (a) of Fig. 7) of light exiting from the measured sample.

As illustrated in (a) and (b) of Fig. 7, the liquid crystal display device 10 of the present embodiment including the reflective polarizer film with a brightness enhancement effect 40, i.e., transmission through the reflective polarizer film with a brightness enhancement effect 40 causes the light exiting from the backlight unit 60 in its normal direction to have a higher brightness with respect to incident light which is inclined in a wider range.

Namely, the light exiting from the backlight unit 60 is emitted from a wide polar angle (θ) range in a range of substantially all the azimuth angles (Φ).

An increase in brightness of the backlight unit 60 in the case where the A-PCF (reflective polarizer film with a brightness enhancement effect 40) is provided is remarkable particularly in a range of an inclined angle (a polar angle (θ)) of 30° to 70°.

According to the above description, in a case where the reflective polarizer film with a brightness enhancement effect 40 is provided between (i) the backlight unit 60 and (ii) the first polarizing plate (polarizing plate closer to the backlight unit 60) of the liquid crystal display element 20, more amount of inclined light enters into the liquid crystal display element 20.

### (Light Exiting from Liquid Crystal Display Device)

Next, the following description discusses how light exiting from the liquid crystal display device 10 in its normal direction depends on azimuth angle (Φ) and polar angle (θ) of incident light, referring to (a) and (b) of Fig. 8.

Note here that, in (a) of Fig. 8, the liquid crystal display device 10 according to the First Embodiment whose configuration is schematically illustrated in Fig. 1 serves as a measured sample and intensities of received light were measured in the normal direction.

In contrast, in (b) of Fig. 8, the liquid crystal display device 10 of the present embodiment whose configuration is schematically illustrated in Fig. 6 (obtained by modifying the liquid crystal display device 10 of the First Embodiment to further include the A-PCF serving as the reflective polarizer film with a brightness enhancement effect 40) serves as a measured sample.

Namely, (a) and (b) of Fig. 8 illustrate what difference exists between (i) the liquid crystal display device 10 including the reflective polarizer film with a brightness enhancement effect 40 and (ii) the liquid crystal display device 10 including no reflective polarizer film with a brightness enhancement effect 40, in terms of a dependency of light exiting from the liquid crystal display device 10 in its normal direction on azimuth angle (Φ) and polar angle (θ) of incident light.

Note that conditions such as a measuring system for the measurement of the intensities of received light correspond to the measuring system and the like described, referring to (b) and (c) of Fig. 3.

As illustrated in (a) and (b) of Fig. 8, the liquid crystal display device 10 including the reflective polarizer film with a brightness enhancement effect 40 is more likely to cause light incident at the azimuth angles (Φ) of 45°, 135°, 225°, and 315° and at polar angles (θ) particularly of 30° to 70° to be emitted in the normal direction.

Fig. 9 is a graph illustrating a difference, between (i) the liquid crystal display device 10 including the reflective polarizer film with a brightness enhancement effect 40 and (ii) the liquid crystal display device 10 including no reflective polarizer film with a brightness enhancement effect 40, in light exiting from the liquid crystal display device 10 in the normal direction (a subtraction under similar conditions of the intensity of light exiting from the liquid crystal display device 10 including the reflective polarizer film with a brightness enhancement effect 40 from the intensity of light exiting from the liquid crystal display device 10 including no reflective polarizer film with a brightness enhancement effect 40).

As illustrated in Fig. 9, the liquid crystal display device 10 including the reflective polarizer film with a brightness enhancement effect 40 is more likely to cause incident light at the azimuth angles (Φ) of 45°, 135°, 225°, and 315° and at the polar angle (θ) of 50° in particular to be emitted in the normal direction.

As described earlier, emission of such inclined light in the normal direction of the liquid crystal display device 10 tends to cause a reduction in contrast.

Note that measurement systems and measured samples for finding a difference in emission intensity for the measurement illustrated in Fig. 9 correspond to those described earlier. Note also that this measurement is carried out with respect to the liquid crystal display device 10 which carries out a black display.

### (Liquid Crystal Display Device of the Present Embodiment)

In this regard, the liquid crystal display device 10 of the present embodiment employs the backlight unit 60 in which light exiting from the backlight unit 60 has a half width of 31°, similarly to the liquid crystal display device 10 of the First Embodiment.

Accordingly, even the liquid crystal display device 10 including the reflective polarizer film with a brightness enhancement effect 40 can realize (i) a display which has an in-plane uniform brightness and (ii) a high-contrast display.

### (Examples and Comparative Examples)

The following description specifically discusses the detailed embodiments and properties of the liquid crystal display devices 10 having the configurations of the First and Second Embodiment, i.e., the liquid crystal display device 10 including the reflective polarizer film with a brightness enhancement effect and the liquid crystal display device 10 including no reflective polarizer film with a brightness enhancement effect, referring to Examples and Comparative Examples.

Fig. 10 is a chart illustrating, for the Examples and the Comparative Examples, brightness distributions and contrasts of (i) the backlight unit 60 alone and (ii) the backlight unit 60 for which the A-PCF serving as the reflective polarizer film with a brightness enhancement effect 40 is provided on a side of the backlight unit 60 on which side light exits from the backlight unit 60.

Among the Examples and the Comparative Examples, the backlight units 60 and the liquid crystal display elements 20 are similarly configured and the diffusing sheets 70 are differently configured.

Namely, as the upper diffusing sheets 70, "D151SIII" (product name, made by TSUJIDEN CO., LTD.) was used in Example 1, "D120SII" (product name, made by TSUJIDEN CO., LTD.) was used in Example 2, "D117UESIII" (product name, made by TSUJIDEN CO., LTD.) was used in Comparative Example 1, and "D114SIII" (product name, made by TSUJIDEN CO., LTD.) was used in Comparative Example 2. Note that the "D151SIII" has a haze value of 55.0%, the "D120SIII" has a haze value of 76.0%, the "D117UESIII" has a haze value of 32.5%, and the "D114SIII" has a haze value of 81.4%.

For the lower diffusing sheets 72, an identical film "D122S4" (made by TSUJIDEN CO., LTD) was used in the Comparative Examples 1 and 2 and the Examples 1 and 2.

Optical characteristics such as a half width were measured for, for example, the backlight units in which the diffusing sheets were made of the foregoing materials.

Note here that (a) and (b) of Fig. 11 illustrate cross-sectional configurations of measured samples used for the measurement of the optical characteristics.

Namely, the measured sample of "backlight unit alone" or "backlight unit with no A-PCF" shown in Fig. 10 has the cross-sectional configuration illustrated in (a) of Fig. 11.

In contrast, the measured sample of "backlight unit + A-PCF" or "backlight unit with A-PCF" shown in Fig. 10 has the cross-sectional configuration illustrated in (b) of Fig. 11.

Note here that the measured sample illustrated in (a) of Fig. 11 and the measured sample illustrated in (b) of Fig. 11 are different in whether the measured samples include the A-PCF serving as the reflective polarizer film with a brightness enhancement effect 40 or not.

### (Half Width)

To begin with, a half width is explained below. Note here that the half width was measured for the measured sample illustrated in (a) of Fig. 11, i.e., the measured sample for which no reflective polarizer film with a brightness enhancement effect 40 was provided.

As illustrated in Fig. 10, in a range of the azimuth angle (Φ) of 0° to 360°, the Example 1 had a half width of 31°, the Example 2 had a half width of 33°, the Comparative Example 1 had a half width of 25°, and the Comparative Example 2 had a half width of 45°.

### (Intensity of Light Emitted in Normal Direction)

For the Examples and the Comparative Examples, (i) contrasts of the backlight unit 60 with no A-PCF serving as the reflective polarizer film with a brightness enhancement effect 40 (see (a) of Fig. 11) and the backlight unit 60 with the A-PCF serving as the reflective polarizer film with a brightness enhancement effect 40 (see (b) of Fig. 11) and (ii) incident angle (azimuth angle (Φ) and polar angle (θ)) dependences of brightnesses with respect to a normal direction were measured.

Fig. 10 shows that incident light from a wider polar angle (θ) range tends to exit from the backlight unit 60 in its normal direction as light exiting from the backlight unit 60 has a larger half width and the upper diffusing sheet 70 has a larger haze value.

Further, Fig. 10 shows that incident light from a wider polar angle (θ) range exits from the backlight unit 60 for which the reflective polarizer film with a brightness enhancement effect 40 is provided than from the backlight unit 60 alone.

### (Contrast (Backlight Unit))

Note that the backlight unit 60 tends to have a lower contrast as light exiting from the backlight unit 60 has a larger half width and the upper diffusing sheet 70 has a larger haze value.

Note also that the backlight unit 60 for which the reflective polarizer film with a brightness enhancement effect 40 is provided tends to have a lower contrast than the backlight unit 60 alone.

### (Contrast (Liquid Crystal Display Device))

Next, for the Examples and the Comparative Examples, there were measured contrasts of (i) the liquid crystal display device 10 which was a combination of the backlight unit 60 alone and the liquid crystal display element 20 and (ii) the liquid crystal display device 10 which was a combination of the backlight unit 60 for which the reflective polarizer film with a brightness enhancement effect was provided and the liquid crystal display element 20.

Fig. 12 is a chart illustrating measured contrasts of the liquid crystal display devices 10 of the Examples and the Comparative Examples.

Note that a "moiré" produced due to an interaction between the backlight unit 60 and a pitch between pixels of the liquid crystal display element 20 was visually observed for evaluation.

### (With No Reflective Polarizer Film with a Brightness Enhancement Effect)

First, configurations in which no A-PCFs serving as the reflective polarizer films with a brightness enhancement effect 40 are provided are explained below.

As illustrated in Fig. 12, in the Example 1 which has the half width of 31°, no moiré was produced. Further, the Example 1 was able to realize a contrast which was equivalent or by no means inferior to a contrast of the Comparative Example 1 which cannot be actually employed because a moiré is produced.

In contrast, the Comparative Example 2, in which no moiré was produced, had a low contrast.

### (With Reflective Polarizer Film with a Brightness Enhancement Effect)

Next, configurations in which the A-PCFs serving as the reflective polarizer films with a brightness enhancement effect 40 are provided are explained below.

The configurations in which the A-PCFs are provided generally have lower contrasts as compared to the configurations in which no reflective polarizer films with a brightness enhancement effect 40 are provided.

This seems to be because inclined light tends to be emitted in the normal direction in the case of the configuration in which the reflective polarizer film with a brightness enhancement effect 40 is provided, as described earlier.

Note here that the Examples 1 and 2 made it possible to realize contrasts which were equivalent or by no means inferior to the contrast of the Comparative Example 1 which cannot be used because a moiré is produced. Note also that the Comparative Example 2, in which no moiré was produced, had a low contrast, similarly to the case of the configuration in which no reflective polarizer film with a brightness enhancement effect 40 is provided.

The present invention is not limited to the description of the embodiments above, but may be altered by a skilled person within the scope of the claims. An embodiment based on a proper combination of technical means disclosed in different embodiments is encompassed in the technical scope of the present invention.

### (Liquid Crystal Display Mode)

The above description discusses an MVA mode liquid crystal display. A liquid crystal display mode of the present invention is not limited to this. Of the vertical alignment mode liquid crystal displays, a so-called circular polarization type is also usable. The circular polarization type is configured such that: liquid crystal molecules are not subjected to a multi-domain alignment but are omnidirectionally aligned by use of a rivet or the like; and phase plates such as λ/4 plates are provided between a liquid crystal layer and respective polarizing plates. Note that differences between the aforementioned linear polarization type and the circular polarization type are described later, referring to Fig. 14.

Note that the present invention is also usable for, for example, a TN (Twisted Nematic) mode and an IPS (In Plane Switching) mode as well as the vertical alignment mode.

Note here that scattering characteristics of inclined light of the foregoing liquid crystal display modes are explained below, referring to (a) through (e) of Fig. 13.

Note here that (a) through (e) of Fig. 13 are graphs illustrating light scattering characteristics of the respective liquid crystal display modes. The following description discusses this point.
(a) through (e) of Fig. 13 illustrate incidence direction (azimuth angle (Φ) and polar angle (θ)) dependencies of intensities of light exiting from a normal direction in measured samples. The measured sample of (a) of Fig. 13 includes polarizing plates which are provided on both sides of a glass substrate so that their respective optical axes cross each other at right angles (in a crossed Nicols relationship). The measured sample of (b) of Fig. 13 is of the circular polarization type (already described) of a vertical alignment mode liquid crystal display element. The measured sample of (c) of Fig. 13 includes a liquid crystal display element employing the ISP mode. The measured sample of (d) of Fig. 13 includes a liquid crystal display element employing the TN mode. The measured sample of (e) of Fig. 13 is the vertical alignment mode liquid crystal display element of the linear polarization type described in the above Embodiments. Note that characteristics shown in (b) through (e) of Fig. 13 are obtained while the liquid crystal display elements are carrying out a black display.

As illustrated in (a) through (e) of Fig. 13, inclined light is more likely to be emitted in the normal direction in the measured samples including the liquid crystal layers (see (b) through (e) of Fig. 13), as compared to the measured sample including no liquid crystal layer but only the glass substrate and the polarizing plates (see (a) of Fig. 13).

Accordingly, as described earlier, control of a half width of light exiting from the backlight 60 can prevent a reduction in contrast as well as production of a moiré and the like, irrespective of a liquid crystal display mode.

Further, as illustrated in (e) of Fig. 13, inclined light is more likely to be emitted in the normal direction in the linear polarization type of the vertical alignment mode such as the MVA mode. As a result, an effect of the present invention of preventing a reduction in contrast is more remarkable in the linear polarization type.

Note here that the circular polarization type and the linear polarization type are explained below, referring to Fig. 14 illustrating a difference between these two types of the vertical alignment mode.

As illustrated in Fig. 14, liquid crystals (liquid crystal molecules) of the liquid crystal layer are omnidirectionally aligned centering around a protrusion such as a rivet in the circular polarization type of the vertical alignment mode.

In contrast, the liquid crystal layer is divided into a plurality of alignment regions R in plan view in the linear polarization type of the vertical alignment mode. Note here that an alignment region refers to a region in which liquid crystals (liquid crystal molecules) are aligned in a direction different from a direction in which liquid crystals (liquid crystal molecules) of a part adjacent to the region are aligned. Fig. 14 illustrates an example of a four-domain alignment.

The circular polarization type and the linear polarization type are different in configuration of a layer of a liquid crystal display element in accordance with the difference in configuration of the liquid crystal layer. Namely, in the linear polarization type, only polarizing plates are provided on both sides of the liquid crystal layer (a liquid crystal panel), respectively. In contrast, in the circular polarization type, phase plates such as λ/4 plates (circularly polarizing plates) in addition to polarizing plates are provided on both sides of the liquid crystal layer (a liquid crystal panel), respectively.

Specifically, for example, phase plates are provided on both sides of the liquid crystal layer (liquid crystal panel), respectively, and then polarizing plates are provided on outer sides of the respective phase plates.

The linear polarization type of the vertical alignment mode generally has a higher contrast than the circular polarization type of the vertical alignment mode. As a result, a backlight of the present invention more effectively functions in the linear polarization type than in the circular polarization type.

Note that measurement conditions such as a measuring system used in the measurement of light intensities whose results are shown in (a) through (e) of Fig. 13 are similar to those described earlier, referring to (b) and (c) of Fig. 3, and the like.

### (Others)

The above description discusses a prism sheet which has triangular grooves. Grooves of a prism sheet are not limited to this in shape, and can also be rounded and be constituted by semicircular peaks and valleys.

Furthermore, in the above description, the number of the prism sheets used is two. Prism sheets are not limited to this in number. For example, no prism sheet or one (1) prism sheet is also usable.

Moreover, in the above description, two diffusing sheets, i.e., the upper diffusing sheet 70 and the lower diffusing sheet 72 are provided in the backlight unit 60. Only one of the upper diffusing sheet 70 and the lower diffusing sheet 72 can be provided in the backlight unit 60.

Further, in the above description, the upper diffusing sheet 70 and the lower diffusing sheet 72 are made of the same material. The upper diffusing sheet 70 and the lower diffusing sheet 72 can also be made of different materials.

### Industrial Applicability

A backlight unit and a liquid crystal display device of the present invention, which are capable of realizing a high-contrast display, are preferably usable for display applications which are required to realize a high-definition display.

## Claims

1. A backlight unit comprising:
a light guiding plate; and
a diffusing sheet,
the backlight unit causing light exiting through a light exit plane thereof to backlight a liquid crystal display element,
the light exiting through the light exit plane, having a half width of not more than 44°.

2. The backlight unit as set forth in claim 1, wherein the half width is not less than 20° and not more than 40°.

3. The backlight unit as set forth in claim 1 or 2, wherein the diffusing sheet has a haze value of not more than 80%.

4. The backlight unit as set forth in claim 3, wherein the diffusing sheet has a haze value of not less than 30% and not more than 76%.

5. The backlight unit as set forth in any one of claims 1 through 4, further comprising a prism sheet provided between the light guiding plate and the diffusing sheet.

6. A liquid crystal display device comprising:
a liquid crystal display element; and
a backlight unit recited in any one of claims 1 through 5,
the backlight unit being provided on a back side of the liquid crystal display element.

7. The liquid crystal display device as set forth in claim 6, further comprising a reflective polarizer film with a brightness enhancement effect provided between the liquid crystal display element and the backlight unit.

8. The liquid crystal display device as set forth in claim 6 or 7, wherein:
the liquid crystal display element is a vertical alignment mode liquid crystal display element; and
a liquid crystal layer included in the liquid crystal display element is divided into a plurality of different alignment regions in plan view.

9. The liquid crystal display device as set forth in claim 6 or 7, wherein:
the liquid crystal display element is a vertical alignment mode liquid crystal display element;
liquid crystal molecules are omnidirectionally aligned in plan view in a liquid crystal layer included in the liquid crystal display element; and
circularly polarizing plates are provided on both sides of the liquid crystal layer.

10. The liquid crystal display device as set forth in claim 6 or 7, wherein the liquid crystal display element is a twisted nematic liquid crystal display element.
